# EUROPEAN PATENT APPLICATION

(11) **EP 2 177 752 A1**
(43) Date of publication of application: **21.04.2010**
(21) Application number: 08805331.9
(22) Date of filing: 16.07.2008
(51) Int. Cl.: F03D 1/06, B29C 70/86, B64C 11/16

(54) **METHOD FOR MANUFACTURE OF WIND VANES**

(30) Priority: 17.07.2007 ES 200701994; 08.10.2007 ES 200702636
(71) Applicant: García Castro, Francisco Javier, 15670 El Burgo-Culleredo (ES); Manso García, Juan José, 15670 El Burgo-Culleredo (ES)
(72) Inventor: García Castro, Francisco Javier, 15670 El Burgo-Culleredo (ES); Manso García, Juan José, 15670 El Burgo-Culleredo (ES)
(74) Representative: Munoz Garcia, Antonio
(86) International application number: PCT/ES2008/000502
(87) International publication number: WO 2009/010618

(57) **Abstract**

The invention relates to a method for the manufacture of wind vanes, consisting of: formation of a single foam core (2), with numerical control machines, application of reinforcing layers (3) pre-impregnated with resin (4), curing of the layers (3) as part of the application process itself by means of UV (ultraviolet) instant curing and thermal curing, polishing of the vane surface, also by use of an automatic numerical control machine, and final painting. Alternatively, the core is made using a mould, is a single piece or two shells (2a) and (2b) which are subsequently joined with adhesive, is solid or, at least in the root thereof, hollow, or formed by two solid or lightened shells and can contain a central inner tube (6) made of composite as a rigidizing element, and other smaller tubes (7) inside the leading and trailing edges.

## Description

### Object of the Invention

As expressed by the title of the present specification, the present invention relates to a method for the manufacture of wind vanes.

More specifically, the method proposed by the present invention is especially conceived for being used in the manufacture of wind vanes, such vanes being formed by foam cores suitably coated with reinforcing fibers impregnated in synthetic resins, simplifying the process, increasing the reliability in the performance of the part, improving its mechanical behavior, reducing its weight and reducing its economic cost.

### Field of Application

The field of application of the present invention is within the industry dedicated to the manufacture of wind structures, especially the vanes, also being able to comprise other industries, such as the aeronautical industry, since the method of manufacture to which the invention relates can also be applicable to another type of vane or propeller, with similar structural characteristics, intended for different uses.

### Background of the Invention

As a reference to the state of the art, it must be mentioned that until now, wind vanes were manufactured based on producing two shells, the vane back and the vane bottom, depositing layers of fibers and resins as well as cores and other rigidizing elements which, once consolidated by the polymerization of the resins, are joined together by means of adhesives, giving rise to the conventional wind vane.

In other words, all vanes are currently produced by forming the two shells separately, either by manual contact, infusion or with prepreg, both shells being subsequently joined together to seek the unity of the part, which can lead to difficulties both in achieving the unity thereof and with its mechanical behavior, in addition to the extra cost it entails.

The method proposed by the present invention innovatively starts from a single foam core which, cut with absolute precision by means of numerical control machines, forms the outer shape of the skeleton of the vane and next, the reinforcing layers which have pre-impregnated with resin are applied, also by means of the use of numerical control machines.

The curing of the reinforcing layers is done as part of the application process itself by means of the combination of UV (ultraviolet) instant curing and thermal curing.

It should furthermore be pointed out that the applicant is unaware of the existence of any other method for the manufacture of wind vanes having similar features by means of which a practical solution to the described drawbacks is provided.

### Description of the Invention

The present invention therefore devises a method for the manufacture of wind vanes which starts from completely different and innovative principles, whereby it is configured as a remarkable novelty in its field of application.

Specifically, the proposed method starts from a single foam core which, cut with absolute precision by means of numerical control machines, configures the outer shape of the skeleton of the vane.

Next, the reinforcing layers pre-impregnated with resin are applied, also by means of the use of numerical control machines, such that they form a lining or coating of the described initial foam core.

The curing of the reinforcing layers will be done as part of the application process itself by means of the combination of UV (ultraviolet) instant curing and thermal curing.

Finally, the end polishing finish of the vane surface is performed, also by means of the use of an automatic numerical control machine, and the final painting is performed.

It should be pointed out that the mentioned core will be made of expanded materials or foams, the densities of which can range, according to the requirements of each case, between 40 to 200 kg/m³, being able to be made of polyurethane, PVC, PET, polystyrene or Rohacell, among others, choosing the most suitable according to the type of resin to be used (polyester, vinyl ester or epoxy), according to the mechanical requirements of the vane or according to the commercial presentation of said foams, i.e., the volume of the panels with which they are distributed by the company marketing them, as well as their densities, being able to combine in one and the same core several different types of foam.

In addition, it is important to point out that the described process allows two embodiment variants of the core:
a) For the formation thereof, commercial plates are used to start and they are cut by the numerical control machine, as mentioned, after which it must be sealed on its surface by means of a suitable pulp, said pulp must be machined and subsequently polished to go on to the next coating phase.
b) or the foam is created and manufactured in a shaping mold, this option having more advantages since the machining of the foam is eliminated, the necessary operation for sealing the open pore in the machined foam is eliminated, as is the immediate polishing, and no left-over residues of the machining are created, improving cleaning and costs.

For this second case, polyurethane foam, the cost/m³ of which is very advantageous, will preferably be used starting from its liquid components. It should be pointed out, however, that even though the formation of foam casts with considerable volume, such as that concerned herein, is common, the reinforcement of the molds should be studied, and in this case they should preferably be made of sheet metal.

On the other hand, the method of the invention provides that the core can be integral, i.e., any section of the vane forming a single piece, or in two shells which are subsequently joined together by means of an adhesive, forming a single section.

The core may also not be solid, at least in the root thereof, being able to be internally hollow or formed by two lightened shells, the structural calculation being what defines this point.

Furthermore, if the calculation made it necessary, the core can house a central inner tube made of composite like a rigidizing element, as well as other smaller ones inside leading and trailing edges.

In turn, the coating or lining with composite which, as has previously been described, consists of the application on the core of a series of reinforcing layers, normally made of glass fiber, previously impregnated with its resin, is performed by means of numerical control machines existing on the market.

Even though said impregnation can be done directly on the foam, it will preferably be done separately in other installations because it is thus cleaner, the fiber/resin ratio is controlled with greater precision and a better environment is achieved.

The resin will preferably be of the UV/thermal curing type, which advantageously allows faster curings (in seconds), being able to reach considerable thicknesses. Layers of up to 3 mm of thickness can be cured sequentially in each pass, with an absolute assurance, being able to polymerize polyester, vinyl ester, epoxy, urethane and acrylic resins.

Finally, another numerical control machine will polish the outer finish of the final lining, leaving the vane ready for the desired painting or finish.

The described method has the advantage of allowing the vane to be split into two or three longitudinal sections to facilitate its transport and handling. The joining of the cut sections will be done, in such case, using connecting parts adhered to the previously indicated central and side tubes.

In another embodiment of the invention, the method for the manufacture of wind vanes consists, as described in the main patent, of starting from a single foam core which, cut with precision by means of numerical control machines, configures the outer shape of the skeleton of the vane.

Next, the reinforcing layers forming the lining or coating of the described initial foam core are applied. These layers of fibers, in a characterizing manner, can be deposited, if appropriate, in dry conditions, being applied directly on the profiled foam either by means of automatons or manually, such that they form the mentioned lining.

In turn, said lining will be impregnated with the suitable heat-setting resin for normal or thermal curing, either by infusion methods, making use of conventional materials and methods or by injection, using to that end the necessary external closure molds which will have previously been manufactured for that purpose.

Finally, if needed, the end polishing finish of the vane surface will be performed also by means of the use of an automatic numerical control machine, and the final painting will be performed.

The method for the manufacture of wind vanes therefore has innovative structural and constitutive features that have been unknown up until now for such purpose, and these reasons, combined with its practical usefulness, provide it with sufficient grounds to obtain the exclusive privilege that is requested.

### Description of the Drawings

To complement the description being made and for the purpose of aiding to better understand the features of the invention, a set of drawings is attached to this specification as an integral part thereof in which the following is shown with an illustrative and non-limiting character:
Figure 1 shows a schematic cross section view of an embodiment of a wind vane manufactured by means of the method object of the invention, in which the main parts it consists of as well as the configuration and arrangement thereof can be seen.
Figure 2 shows a schematic cross section view of an embodiment variant of the vane manufactured by means of the method of the invention, which has the core made from two recessed shells, incorporating rigidizing tubes therein.

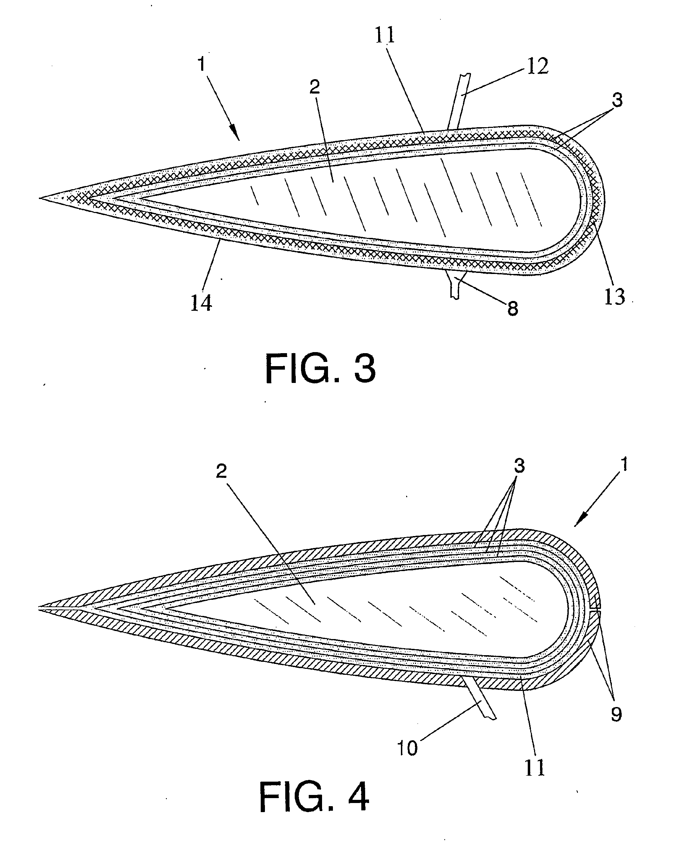

Figure 3 shows a schematic cross section view of a wind vane made by means of the method of the invention during the impregnation phase of the reinforcing layers by means of an infusion system.
Figure 4 shows a schematic cross section view of a wind vane during the impregnation phase of the reinforcing layers by means of an injection system.

### Preferred Embodiment of the Invention

In view of the mentioned drawings and according to the reference numbers adopted, it can be seen how the method for the manufacture of wind vanes proposed by the invention, said vanes (1) being formed by foam cores (2) coated with reinforcing fibers (3) impregnated with synthetic resins (4), comprises the following steps:
- formation of a single foam core (2) by means of numerical control machines or by means of a shaping mold, configuring the outer shape of the skeleton of the vane (1).
- application, also by means of the use of numerical control machines, of the reinforcing layers (3) the impregnation with resin (4) of which will have previously been performed, which form a lining or coating of the initial foam core (2). It should be mentioned that for said operation a vacuum bag will be applied for the purpose of facilitating the compaction of said reinforcing layers (3).
- the curing of the reinforcing layers (3) is done as part of the application process itself by means of the combination of UV (ultraviolet) instant curing and thermal curing.
- polishing of the vane surface, also by means of the use of an automatic numerical control machine, and final painting.

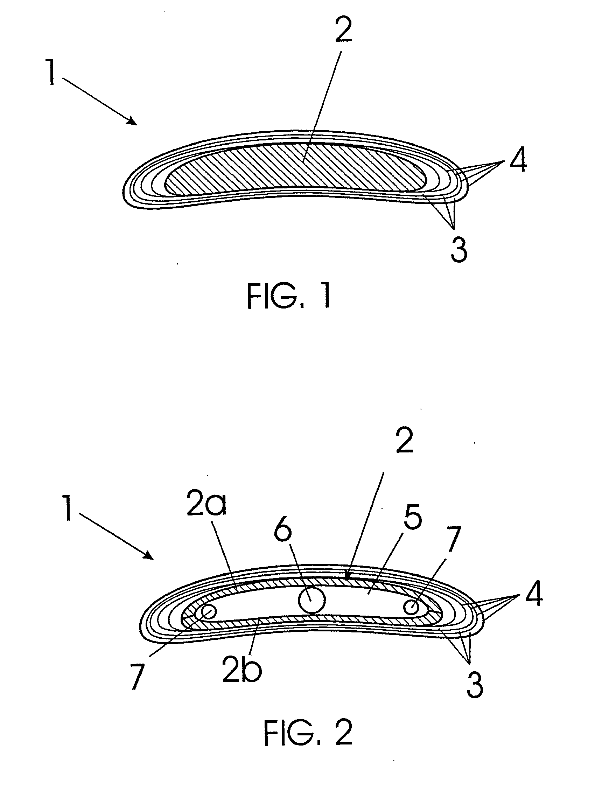

The method of the invention provides that the core (2) can be formed by a single solid piece, as shown in the example depicted in Figure 1, or, alternatively, formed by two shells (2a) and (2b) which are subsequently joined together by means of an adhesive, forming a single section.

Likewise, the core may not be solid, at least in the root thereof, being able to be internally hollow or formed by two lightened shells (2a) and (2b), being able to house in the inner hollow (5) a central tube (6) made of composite like a rigidizing element, as well as other smaller tubes (7) inside leading and trailing edges (Figure 2).

In a second embodiment of the invention, it comprises the following steps:
- formation of a single foam core (2) by means of numerical control machines or by means of a shaping mold, configuring the outer shape of the skeleton of the vane (1).
- application of the reinforcing layers (3) forming the lining or coating of the described foam core (2), deposited in dry conditions, being applied directly on the profiled foam (2) either by means of automatons or manually.
- impregnation of the reinforcing layers (3) with the suitable heat-setting resin (11) for normal or thermal curing, either by infusion methods, as can be seen in Figure 1, making use of conventional materials and methods, such as a resin inlet duct (12), a transport mesh (13), aerators, absorbers for the resin, an external closure bag (14) and a vacuum extraction duct (8), or by injection, as is observed in Figure 2, using to that end the necessary external closure molds (9) that will have previously been manufactured for such purpose, also having a resin injection duct (10).
- polishing of the vane surface, if needed, also by means of the use of an automatic numerical control machine, and final painting.

Having sufficiently described the nature of the present invention, as well as the manner of putting it into practice, it is not considered necessary to further extend its explanation so that any person skilled in the art understands its scope and the advantages derived from it, hereby stating that other embodiments which differ in detail from that indicated by way of example can be carried out to practice within its essential nature and it will also be within the protection that is obtained provided it does not alter, change or modify its essential principle.

## Claims

1. A method for the manufacture of wind vanes, such wind vanes being formed by foam cores (2) coated with reinforcing fibers impregnated with resins, **characterized by** consisting of the following steps:
- formation of a single foam core (2), by means of numerical control machines, configuring the outer shape of the skeleton of the vane (1);
- application, also by means of the use of numerical control machines, of several reinforcing layers (3) pre-impregnated with resin (4), applying a vacuum bag for the purpose of facilitating the compaction thereof, which reinforcing layers (3) form a lining or coating of the initial foam core (2);
- curing of the reinforcing layers (3) as part of the application process itself by means of the combination of UV (ultraviolet) instant curing and thermal curing;
- polishing of the vane surface, also by means of the use of an automatic numerical control machine;
- final painting.

2. The method for the manufacture of wind vanes according to claim 1, **characterized by** the fact that the core (2) is alternatively made by means of a shaping mold.

3. The method for the manufacture of wind vanes according to claims 1 and 2, **characterized by** the fact that the core (2) is formed by a single piece or, alternatively, by two shells (2a) and (2b) which are subsequently joined together by means of an adhesive, forming a single section.

4. The method for the manufacture of wind vanes according to claims 1 to 3, **characterized by** the fact that the core can be solid or, at least in the root thereof, internally hollow, or formed by two solid or lightened shells.

5. The method for the manufacture of wind vanes according to claims 1 to 4, **characterized by** the fact that the core (2) can house, in the case of presenting a hollow (5), a central inner tube (6) of composite like a rigidizing element, as well as other smaller tubes (7) inside leading and trailing edges.

6. The method for the manufacture of wind vanes according to claims 1 to 5, **characterized by** the fact that the foam shaping the core (2) has variable density, between 40 to 200 kg/m³, as appropriate, in that it is preferably synthetic, being able to be made of polyurethane, PVC, PET, polystyrene, or Rohacell among others, and in that for the formation thereof in a shaping mold, it is made of polyurethane, starting from its liquid components.

7. The method for the manufacture of wind vanes according to claims 1 to 5, **characterized by** the fact that the reinforcing layers (3) are preferably made of glass fiber, and in that the resins with which they are impregnated can be polyester, vinyl ester, epoxy, urethane and acrylic resins.

8. The method for the manufacture of wind vanes according to claim 1, **characterized by** the fact that in the step of application of the reinforcing layers (3) forming the lining or coating of the described foam core (2), such layers are deposited in dry conditions, being applied directly on the profiled foam (2), either by means of automatons or manually; and in that the impregnation of the reinforcing layers (3) with the resin (11) is a subsequent step.

9. The method for the manufacture of wind vanes according to claims 1 and 8, **characterized by** the fact that the step of curing of the resin (11) is performed by means of a normal or thermal method, either by infusion methods, making use of conventional materials and methods, such as an inlet duct (12) for the resin, a transport mesh (13), aerators, absorbers for the resin, an external closure bag (14) and a vacuum extraction duct (8), or by injection, using to that end the necessary external closure molds (9) which will have been manufactured for such purpose, also having a resin injection duct (10).
